# EUROPEAN PATENT SPECIFICATION

(11) **EP 1 677 996 B1**
(45) Date of publication and mention of the grant of the patent: **23.04.2008**
(21) Application number: 03773681.6
(22) Date of filing: 31.10.2003
(51) Int. Cl.: B60C 11/00, B60C 9/18, C08K 9/04

(54) **HIGH-PERFORMANCE TYRE FOR VEHICLE WHEELS**
HOCHLEISTUNGSREIFEN FÜR KRAFTFAHRZEUGRÄDER
PNEU TRES PERFORMANT DESTINE A DES ROUES DE VEHICULE

(43) Date of publication of application: 12.07.2006
(73) Proprietor: Pirelli Tyre S.p.A., 20126 Milano (IT)
(72) Inventor: GIANNINI, Luca, c/o Pirelli Pneumatici S.p.A, I-20126 Milano (IT); FINO, Luigi, c/o Pirelli Pneumatici S.p.A, I-20126 Milano (IT); GALIMBERTI, Maurizio, c/o Pirelli Pneumatici S.P.A, I-20126 Milano (IT); BIZZI, Stefano, c/o Pirelli Pneumatici S.p.A, I-20126 Milano (IT)
(74) Representative: Giannesi, Pier Giovanni
(86) International application number: PCT/EP2003/012137
(87) International publication number: WO 2005/049340

(56) References cited:
- EP-A- 0 543 620
- EP-A- 1 211 283
- EP-A- 1 273 616
- WO-A-00/24596

## Description

The present invention relates to a tyre for vehicle wheels, particularly to a high-performance tyre.

In the field of production of tyres for vehicle wheels, in particular high-performance tyres such as, for example, tyre designed for high-powered cars or, more generally, tyres intended for applications involving high operating speeds and/or extreme driving conditions, the need is increasingly felt of providing ever higher performances in terms of, for example, tread block stability, road grip, steering stability, cornering stability, ride comfort.

Said tyres, which are commonly referred to as "HP" or "UHP" ("High Performance" or "Ultra High Performance") tyres, are in particular those belonging to the classes "V" or "Z" which respectively provide for maximum speeds of between 210 Km/h and 240 Km/h and higher than 240Km/h.

Usually, tyres for vehicles wheels comprise a carcass structure essentially made up of one or more carcass plies substantially of a toroidal shape and having their axially opposite side edges in engagement with respective circumferentially inextensible annular reinforcing elements, usually referred to as "bead wires".

On the carcass structure is applied, in a radially external position, a belt structure comprising one or more belt strips in the form of a closed ring and essentially made up of textiles or metallic cords suitably oriented with respect to each other and with respect to the cords belonging to the adjacent carcass plies.

At a radially external position of the belt structure, a tread band is provided which usually consists of a band of elastomeric material of suitable thickness.

Finally, a pair of sidewalls is provided on the opposite sides of the tyre, each of said sidewalls covering a side portion of the tyre included between a so-called shoulder region located in proximity to the corresponding side edge of the tread band, and a so-called bead located in correspondence to the respective bead wire.

In high-performance tyres, to ensure good performances at high operating speeds and/or under extreme driving conditions, in a radially internal position with respect to the tread band, at least one layer of elastomeric material having low thickness and high tensile properties (in particular tensile modulus and stress at break) may be provided.

The mechanical properties of the above layer may be increased by increasing crosslinking density of the elastomeric material by using a large amount of sulphur; or by using a large amount of carbon black, or a very fine and structured carbon black which has a high reinforcing capacity. However, the above ways of increasing mechanical properties may lead to a number of drawbacks.

For instance, the use of a large amount of sulphur may cause remarkable reversion phenomena, which result in modifications of the tyre performances during use. On the other side, it is known that carbon black gives pronounced hysteresis properties to the elastomeric material, namely an increase in the dissipated heat under dynamic conditions, which results in an increase in the rolling resistance of the tyre. In addition, a large amount of carbon black remarkably increases viscosity of the non-crosslinked elastomeric material and, consequently, has a negative impact on its processability and extrudability.

Threfore, other ways are usually employed to improve mechanical properties of the above layer under the tread band. Usually, the elastomeric material is reinforced by organic fibres such as, for example, polyamide fibres (in particular, aromatic polyamide fibres known as "aramide fibres"), polyester fibres or polyolefin fibres.

For example, International Patent Application WO 00/24596 in the name of the Applicant discloses a tyre with an elastomeric intermediate layer of compound material disposed between the tread band and the belted plies wherein the elastomeric intermediate layer is made of a fibre-reinforced material. Said elastomeric intermediate layer may be reinforced with short reinforcing fibres such as, for example, aramide fibres (i.e. Kevlar® pulp) to improve its modulus of elasticity, among other mechanical characteristics.

European Patent Application EP 691,218 discloses a tyre component for a pneumatic tire comprising a reinforced vulcanizable composition, said composition including a vulcanizable elastomeric matrix material having dispersed therein an effective reinforcing amount of partially oriented fibres having a modulus of less than 10 GPa, preferably less than 6 GPa. As an alternative embodiment, a tyre component may be reinforced with a mixture of partially oriented fibres and fibrillated pulp fibres (i.e. Kevlar® pulp). The above mentioned vulcanizable composition is said to be particularly useful for the tread base of a pneumatic tyre.

The Applicant has faced the problem of providing a tyre for vehicle wheels, in particular a high-performance tyre, which combines improved performances in hard handling conditions with good maneuverability and comfort during use under normal driving conditions (i.e. soft handling).

The Applicant has observed that a tyre, especially when used at high operating speed and/or under extreme driving conditions (i.e. hard handling), is subjected to remarkable forces which are oriented both transversally and longitudinally, therefore a reinforcement of the tyre in both directions is required.

The Applicant has observed that the above combination of properties cannot be achieved when the tyre is reinforced with a layer placed under the tread band made from an elastomeric material containing aramid fibres. Firstly, the Applicant has observed that aramid fibres have a remarkable anisotropic behaviour, namely they substantially orient in the direction of the shear forces exerted during extrusion and calendering of the uncured elastomeric material to form the layer (usually named "calendering direction"), so as to give to the tyre essentially a longitudinal reinforcement, namely a reinforcement essentially in the circumferential direction of the tyre. Moreover, the Applicant has observed that the reinforcement conferred to the elastomeric material by aramid fibres remains substantially unchanged when the stress at which the material is subjected increases.

On the other hand, the Applicant has observed that an increase in the amount of aramide fibres added to the elastomeric material in order to increase mechanical properties does not necessarily produce the desired effect. In fact, because of a poor dispersion, a large amount of aramid fibres may impair the processability of the uncured elastomeric material and therefore the quality of the finished product, both in terms of mechanical properties and of surface appearance. This may cause tearings and detachments of the reinforcing layer from the other structural components of the tyre either during manufacturing process or during use of the tyre.

The Applicant has now found that it is possible to obtain tyres showing improved performances during use at high operating speed and/or under extreme driving conditions (hard handling) combined with a good behaviour under normal driving conditions (soft handling), particularly comfort and manoeuvrability, by applying in a radially internal position with respect to the tread band at least one layer of a crosslinked elastomeric material having a dynamic elastic modulus (E'), measured at 70°C, not lower than 20 MPa and a ratio between tensile modulus at 100% elongation (M100) and tensile modulus at 10% elongation (M10) not lower than 1.5.

According to a first aspect, the present invention relates to a tyre for vehicle wheels, comprising:
- a carcass structure shaped in a substantially toroidal configuration, the opposite lateral edges of which are associated with respective right-hand and left-hand bead wires to form respective beads;
- a belt structure applied in a radially external position with respect to said carcass structure;
- a tread band radially superimposed on said belt structure;
- at least one layer of crosslinked elastomeric material applied in a radially internal position with respect to said tread band;
- a pair of sidewalls applied laterally on opposite sides with respect to said carcass structure;
wherein said at least one layer of crosslinked elastomeric material has the following characteristics:
- a dynamic elastic modulus (E'), measured at 70°C, not lower than 20 MPa, preferably of from 25 MPa to 50 MPa;
- a ratio between tensile modulus at 100% elongation (M100) and tensile modulus at 10% elongation (M10) not lower than 1.5, preferably of from 2 to 5.

The dynamic elastic modulus (E') may be measured using an Instron dynamic device in the traction-compression mode, while the tensile modulus may be measured according to Standard ISO 37:19 94. Further details regarding the above measurement methods will be given in the examples reported hereinafter.

According to one preferred embodiment, said at least one layer of crosslinked elastomeric material has a dynamic elastic modulus (E'), measured at 23°C, not lower than 30 MPa, preferably of from 35 MPa to 70 MPa.

According to a further preferred embodiment, said at least one layer of crosslinked elastomeric material has a percentage variation of tensile modulus at 10% elongation (M10), measured in a direction substantially parallel to the equatorial plane of the tyre, with respect to tensile modulus at 10% elongation (M10), measured in a direction substantially perpendicular to the equatorial plane of the tyre, not higher than 20%, preferably not higher than 15%, more preferably not higher than 5%.

The above variation is an index of the isotropic behaviour of the material forming the layer, since the direction parallel to the equatorial plane of the tyre susbtantially corresponds to the direction at which the uncured material exits from the extrusion apparatus (or, optionally, the calendering apparatus) to form the layer.

According to one preferred embodiment, said at least one layer of crosslinked elastomeric material has a thickness lower than 2 mm, preferably of from 0.5 mm to 1.5 mm.

According to one preferred embodiment said at least one layer of crosslinked elastomeric material is placed between said tread band and said belt structure.

According to a further preferred embodiment, said at least one layer of crosslinked elastomeric material is placed between said belt structure and said carcass structure.

According to one preferred embodiment, said at least one layer of crosslinked elastomeric material is formed by a plurality of coils of a continuous elongated element.

Preferably, also the tread band is formed by a plurality of coils of a continuous elongated element, said elongated element consisting of a crosslinkable elastomeric material. Said elongated element may be produced, for example, by extruding said crosslinkable elastomeric material. Preferably, the green tyre is obtained by assembling its structural elements onto a toroidal support. Further details of the methods of forming and/or depositing the various components of the tyre on a toroidal support are described, for example, in International Patent Application WO 01/36185 and in European Patent EP 976,536 in the name of the Applicant.

The above combination of mechanical properties may be advantageously obtained by adding to the elastomeric material at least one layered inorganic material. The addition of said layered inorganic material provides the above combination of mechanical properties without causing undesired effects on other properties of the elastomeric material (i.e. viscosity, dispersion, green adhesiveness, hysteresis).

Therefore, according to one preferred embodiment, said elastomeric material comprises:
(a) at least one diene elastomeric polymer;
(b) at least one layered inorganic material having an individual layer thickness of from 0.01 nm to 30 nm, preferably from 0.05 nm to 15 nm, more preferably from 0.1 nm to 2 nm.

According to one preferred embodiment, said elastomeric material further comprises (c) at least one carbon black reinforcing filler.

According to one preferred embodiment, said elastomeric material further comprises at least one silane coupling agent (d).

According to one preferred embodiment, said layered inorganic material (b) is present in the elastomeric material in an amount of from 1 phr to 120 phr, preferably from 5 phr to 80 phr.

For the purposes of the present description and of the claims which follow, the term "phr" means the parts by weight of a given component of the elastomeric material per 100 parts by weight of the diene elastomeric polymer.

According to one preferred embodiment, the layered inorganic material (b) which may be used in the present invention may be selected, for example, from phyllosilicates such as: smectites, for example, montmorillonite, nontronite, beidellite, volkonskoite, hectorite, saponite, sauconite; vermiculite; halloisite; sericite; or mixtures thereof. Montmorillonite is particularly preferred.

In order to render the layered inorganic material (b) more compatible with the diene elastomeric polymer (a) said layered inorganic material (b) may be treated with a compatibilizer.

According to one preferred embodiment, said compatibilizer may be selected, for example, from the quaternary ammonium or phosphonium salts having general formula (I): 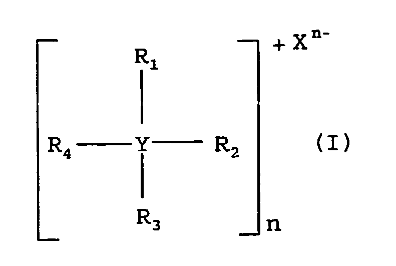 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulphur;
- Xⁿ⁻ represents an anion such as the chlorine ion, the sulphate ion or the phosphate ion;
- n represents 1, 2 or 3.

The treatment of the layered inorganic material (b) with the compatibilizer may be carried out according to known methods such as, for example, by an ion exchange reaction between the layered inorganic material and the compatibilizer: further details are described, for example, in patents US 4,136,103, US 5,747,560, or US 5,952,093.

Example of layered inorganic material (b) which may be used according to the present invention and is available commercially is the product known by the name of Dellite^{®} 67G from Laviosa Chimica Mineraria S.p.A.

According to one preferred embodiment, the diene elastomeric polymer (a) which may be used in the present invention may be selected from those commonly used in sulphur-crosslinkable elastomeric materials, that are particularly suitable for producing tyres, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene and isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof.. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymer (a) which may be used in the present invention may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, said elastomeric material comprises at least 10% by weight, preferably between 20% by weight and 100% by weight, with respect to the total weight of the at least one diene elastomeric polymer (a), of natural rubber.

The above reported elastomeric material may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM) ; polyisobutene; butyl rubbers; halobutyl rubbers, in particular chlorobutyl or bromobutyl rubbers; or mixtures thereof.

A diene elastomeric polymer (a) or an elastomeric polymer (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or patents US 4,742,124 and US 4,550, 142).

As disclosed above, said elastomeric material further comprises at least one carbon black reinforcing filler (c).

According to one preferred embodiment, the carbon black reinforcing filler (c) which may be used in the present invention may be selected from those having a surface area of not less than 20 m²/g (determined by CTAB absorption as described in Standard ISO 6810:1995).

According to one preferred embodiment, said carbon black reinforcing filler (c) is present in the elastomeric material in an amount of from 0.1 phr to 120 phr, preferably from 20 phr to 90 phr.

As disclosed above, said elastomeric material further comprises at least one silane coupling agent (d).

According to one preferred embodiment, the silane coupling agent (d) which may be used in the present invention may be selected from those having at least one hydrolizable silane group which may be identified, for example, by the following general formula (II):

(R)₃Si-CₙH₂ₙ-X (II)

wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃, or -S-COR, in which m and n are integers between 1 and 6 inclusive and the groups R are defined as above.

Among the silane coupling agents that are particularly preferred are bis(3-triethoxysilylpropyl)tetrasulphide and bis(3-triethoxysilylpropyl)-disulphide. Said coupling agents may be used as such or as a suitable mixture with an inert filler (for example carbon black) so as to facilitate their incorporation into the elastomeric material.

According to one preferred embodiment, said silane coupling agent (d) is present in the elastomeric material in an amount of from 0.01 phr to 10 phr, preferably from 0.5 phr to 5 phr.

At least one additional reinforcing filler may advantageously be added to the above reported elastomeric material, in an amount generally of from 0.1 phr to 120 phr, preferably from 20 phr to 90 phr. The reinforcing filler may be selected from those commonly used for crosslinked manufactured products, in particular for tyres, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

When a reinforcing filler comprising silica is present, the elastomeric material may advantageously incorporate a silane coupling agent (d) capable of interacting with the silica and of linking it to the diene elastomeric polymer during the vulcanization. Examples of silane coupling agent (d) which may be used have been already disclosed above.

According to one preferred embodiment, the tyre tread band is formed by a crosslinked elastomeric material having a dynamic elastic modulus (E'), measured at 23°C, of from 5 MPa to 25 MPa, preferably from 7 MPa to 20 MPa.

Preferably, said crosslinked elastomeric material has a dynamic elastic modulus (E'), measured at 100°C, of from 3 MPa to 10 MPa, more preferably from 3.5 MPa to 8 MPa.

Preferably, said crosslinked elastomeric material has a Tan delta, measured at 23°C, of from 0.20 to 0.90, more preferably from 0.30 to 0.70.

Preferably, said crosslinked elastomeric material has a Tan delta, measured at 100°C, of from 0.10 to 0.35, more preferably from 0.15 to 0.30.

Preferably, said crosslinked elastomeric material has a IRHD hardness, measured at 23°C of from 65 to 85, more preferably from 70 to 80.

Preferably, said crosslinked elastomeric material has a IRHD hardness, messured at 100°C, of from 45 to 75, more preferably from 55 to 66.

Said dynamic elastic modulus (E') and said Tan delta may be measured using an Instron dynamic device in the traction-compression mode, while the IRHD hardness may be measured according to Standard ISO 48:1994 or 48:1994/Amd 1:1999.

Further details regarding the above measurement methods will be given in the examples reported hereinafter.

Preferably, the crosslinked elastomeric material of the tread band, comprises at least one diene elastomeric polymer and at least one reinforcing filler selected from those commonly used in sulphur-crosslinkable elastomeric materials, that are particularly suitable for producing tyres, such as, for example, those above disclosed with respect to the at least one layer of crosslinked elastomeric material.

The elastomeric materials above reported, both for the at least one layer of crosslinked elastomeric material and for the tread band, may be vulcanized according to known techniques, in particular with sulphur-based vulcanizing systems commonly used for diene elastomeric polymers. To this end, in the materials, after one or more stages of thermomechanical processing, a sulphur-based vulcanizing agent is incorporated together with vulcanization accelerators. In the final processing stage, the temperature is generally kept below 120°C and preferably below 100°C, so as to avoid any unwanted pre-crosslinking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric material from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said elastomeric materials may comprise other commonly used additives selected on the basis of the specific application for which the composition is intended. For example, the following may be added to said materials: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said elastomeric material. The amount of plasticizer generally ranges from 0 phr to 70 phr, preferably from 5 phr to 30 phr.

The above reported elastomeric materials may be prepared by mixing together the polymeric components with the reinforcing filler and with the other additives optionally present according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of corotating or counter-rotating twin-screw type.

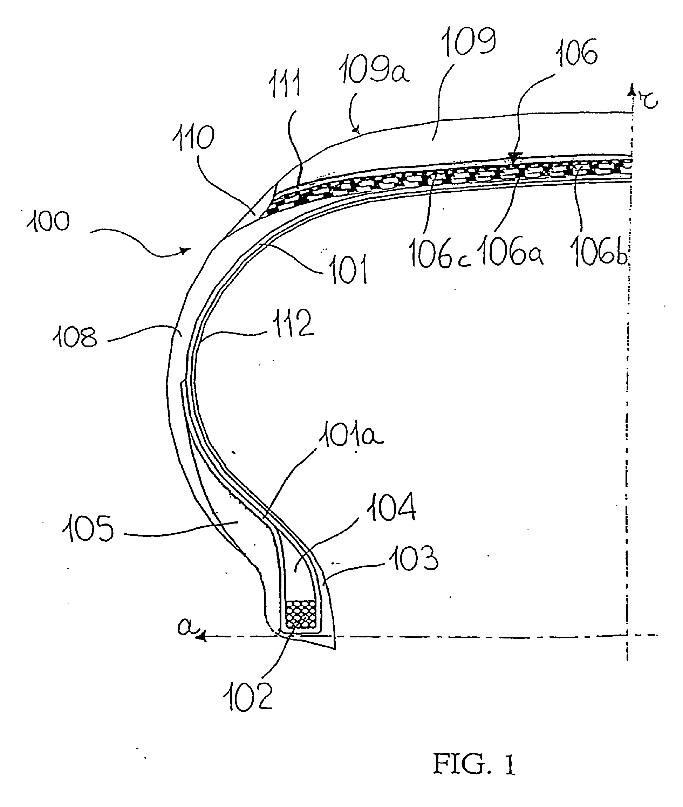

The present invention will now be illustrated in further detail by means of a number of illustrative embodiments, with reference to the attached Fig. 1-2, which are a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead wires (102). The association between the carcass ply (101) and the bead wires (102) is achieved here by folding back the opposite lateral edges of the carcass ply (101) around the bead wires (102) so as to form the so-called carcass back-folds (101a) as shown in Fig. 1.

Alternatively, the conventional bead wires (102) can be replaced with a pair of circumferentially inextensible annular inserts formed from elongate components arranged in concentric coils (not represented in Fig. 1) (see, for example, European patent applications EP 928,680 and EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. Each bead wire (102) is enclosed in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) wherein the bead wires (102) are embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt*"*, which generally incorporates a plurality of reinforcing cords, typically textile cords, arranged at an angle of a few degrees relative to a circumferential direction, and coated and welded together by means of an elastomeric material.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A layer of crosslinked elastomeric material (111) according to the present invention, is placed between the belt structure (106) and the tread band (109).

As represented in Fig. 1, the layer of crosslinked elastomeric material (111) may have uniform thickness.

Alternatively, the thickness of the layer of crosslinked elastomeric material (111) may have a variable thickness in the transversal direction. For example, it may be greater near its outer edges than at the central zone.

In Fig. 1, said layer of crosslinked elastomeric material (111) extends over a surface substantially corresponding to the surface of development of said belt structure (106). Alternatively, said layer of crosslinked elastomeric material (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tyres, a rubber layer (112) generally known as a "liner", which provides the necessary impermeability to the inflation air of the tyre, may also be provided in a radially internal position relative to the carcass ply (101).

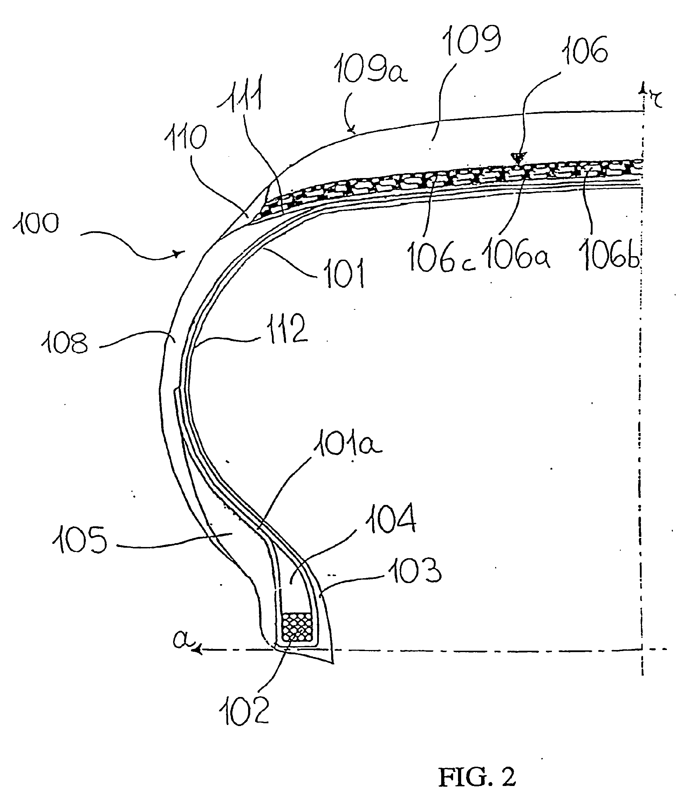

Fig. 2, shows the same tyre (100) of Fig. 1 the only difference being the fact that a layer of crosslinked elastomeric material (111) according to the present invention is placed between the belt structure (106) and the carcass ply (101).

The process for producing the tyre according to the present invention may be carried out according to techniques and using apparatus that are known in the art, as described, for example, in patents EP 199,064, US 4,872,822, US 4,768,937, said process including at least one stage of manufacturing the green tyre and at least one stage of vulcanizing this tyre.

More particularly, the process for producing the tyre comprises the stages of preparing, beforehand and separately from each other, a series of semi-finished products corresponding to the various structural elements of the tyre (carcass plies, belt structure, bead wires, fillers, sidewalls and tread band) which are then combined together using a suitable manufacturing machine. Next, the subsequent vulcanization stage welds the abovementioned semi-finished products together to give a monolithic block, i.e. the finished tyre.

The stage of preparing the abovementioned semi-finished products will be preceded by a stage of preparing and moulding the various blends, of which said semi-finished products are made, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished products are disclosed, for example, in the abovementioned patent applications EP 928,680 and EP 928,702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained as described, for example, in patent EP 242 840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material can vary in general between 3 min and 90 min and depends mainly on the dimensions of the tyre. When the vulcanization is complete, the tyre is removed from the vulcanization mould.

The present invention will be further illustrated below by means of a number of preparation examples, which are given for purely indicative purposes and without any limitation of this invention.

### EXAMPLES 1-2

### Preparation of the elastomeric materials

The elastomeric materials given in Table 1 were prepared as follows (the amounts of the various components are given in phr).

All the components, except sulphur, accelerator (DCBS) and HMT, were mixed together in an internal mixer (model Pomini PL 1.6) for about 5 min (1^{st} Step). As soon as the temperature reached 145±5°C, the elastomeric material was discharged. The sulphur, the accelerator and HMT, were then added and mixing was carried out in an open roll mixer (2^{nd} Step).

**TABLE 1**

| EXAMPLE | 1 (*) | 2 |
|---|---|---|
| 1^{st} STEP | | |
| NR | 80 | 100 |
| N326 | 55 | 55 |
| Zinc Oxide | 5 | 5 |
| Stearic Acid | 2 | 2 |
| Resorcinol | 1.3 | 1.3 |
| Antioxidant | 2 | 2 |
| Si69^{®} | - | 4 |
| Kevlar^{®} | 26 | - |
| Dellite^{®} 67G | - | 40 |
| 2^{nd} STEP | | |
| DCBS | 1.3 | 1.3 |
| PVI | 0.2 | 0.2 |
| Sulphur | 3.0 | 3.0 |
| HMT | 1.5 | 1.5 |

| | | |
|---|---|---|
| (*): comparative. NR: natural rubber; E-SBR 1712: emulsion-prepared butadiene-styrene copolymer (Europrene^{®} 1712 - Polimeri Europa) ; N326: carbon black; Antioxidant: phenyl-p-phenylenediamine; Si69: bis(3-triethoxysilylpropyl) tetrasulphide (Degussa-Hüls) ; Kevlar^{®} Engineered Elastomer: blend of 23% by weight of Kevlar^{®} and 77% by weight of natural rubber (DuPont) ; Dellite^{®} 67G: organo-modified montmorillonite belonging to the smectite family (Laviosa Chimica Mineraria S.p.A.); DCBS (accelerator): benzothiazyl-2-dicyclohexylsulfenamide (Vulkacit^{®} DZ/EGC - Bayer); PVI (retardant): N-cyclohexylthiophthalimide (Santogard^{®} PVI - Monsanto); HMT: hexamethylene tetramine. | | |

The Mooney viscosity ML(1+4) at 100°C was measured, according to Standard ISO 289-1:1994, on the non-crosslinked materials obtained as described above. The results obtained are given in Table 2.

The static mechanical properties according to Standard ISO 37:1994 were measured at different elongation (10%, 50% and 100%) both in the direction of calendering and in the direction perpendicular thereto on samples of the abovementioned elastomeric materials vulcanized at 170°C for 10 min. The results obtained are given in Table 2.

Table 2 also shows the dynamic mechanical properties, measured using an Instron dynamic device in the traction-compression mode according to the following methods. A test piece of the crosslinked material having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±2.2% with respect to the length under pre-load, with a 100 Hz frequency. The dynamic mechanical properties are expressed in terms of dynamic elastic modulus (E') and Tan delta (loss factor) values. As is known, the Tan delta value is calculated as a ratio between the viscous modulus (E") and the elastic modulus (E'), both of them being determined with the above dynamic measurements.

**TABLE 2**

| EXAMPLE | 1(*) | 2 |
|---|---|---|
| Viscosity ML(1+4) | 48.4 | 37.3 |
| STATIC MECHANICAL PROPERTIES | | |
| DIRECTION OF CALENDERING | | |
| 10% Modulus (MPa) | 10.82 | 3.90 |
| 50% Modulus (MPa) | 11.38 | 7.88 |
| 100% Modulus (MPa) | 11.14 | 12.17 |
| M100/M10⁽¹⁾ | 1.03 | 3.12 |
| Stress at break (MPa) | 13.60 | 20.50 |
| DIRECTION PERPENDICULAR TO CALENDERING | | |
| 10% Modulus (MPa) | 5.89 | 3.87 |
| 50% Modulus (MPa) | 7.91 | 7.85 |
| 100% Modulus (MPa) | 8.67 | 11.95 |
| M100/M10 ⁽¹⁾ | 1.47 | 3.09 |
| Stress at break (MPa) | 16.46 | 21.20 |
| DYNAMIC MECHANICAL PROPERTIES | | |
| E' (23°C) (MPa) | 31.28 | 53.36 |
| E' (70°C) (MPa) | 24.24 | 37.40 |
| Tan delta (23°C) | 0.241 | 0.311 |
| Tan delta (70°C) | 0.180 | 0.258 |

| | | |
|---|---|---|
| (*) : comparative; ⁽¹⁾ : ratio between the tensile modulus at 100% elongation (M100) and the tensile modulus at 10% elongation (M10). | | |

The results given in Table 2 show that the crosslinked manufactured product obtained from the elastomeric material as disclosed in the present invention (Example 2) has improved mechanical properties both static and dynamic, in particular with regard to tensile modulus, stress at break and dynamic elastic modulus. Moreover, the elastomeric material according to the present invention shows both a longitudinal and a transversal reinforcement and an increase of the tensile modulus at the increasing of the elongation applied. Said results are obtained without negatively affecting the hysteresis properties. In addition, the results given in Table 2 also show that the viscosity value of said elastomeric material has not been increased.

### EXAMPLE 3-4

Tyres according to Fig. 1 were prepared containg a layer of crosslinked elastomeric material according to Example 1 ( Example 3 - comparative) and according to. Example 2 (Example 4 - according to the present invention).

The elastomeric material of the tread band given in Table 3 was prepared as disclosed in Example 1-2 (the amounts of the various components are given in phr unless otherwise indicated).

**TABLE 3**

| EXAMPLE | 4 |
|---|---|
| 1^{st} STEP | |
| BR | 25 |
| E-SBR 1721 | 75 |
| Silica | 35 |
| N234 | 35 |
| Zinc oxide | 3 |
| Stearic acid | 2 |
| Antioxidant | 2 |
| Microcrystalline wax | 1 |
| Si69^{®} | 1.75 |
| Aromatic oil | 15 |
| 2^{nd} STEP | |
| CBS | 1.8 |
| DPG | 1.9 |
| Sulphur | 1.4 |

| | |
|---|---|
| BR: high-cis 1,3 polybutadiene (Europrene^{®} Neocis BR40 - Polimeri Europa); E-SBR 1721: emulsion prepared butadiene-styrene copolymer (Europrene^{®} 1721 - Polimeri Europa); Silica: precipitated silica with a BET surface area equal to about 165 m²/g (Zeosil^{®} 1165 MP - Rhône-Poulenc); N2234: carbon black; Antioxidant: phenyl-p-phenylenediamine; Si69: bis(3-triethoxysilylpropyl) tetrasulphide (Degussa-Hüls) ; CBS (accelerator): N-cyclohexyl-2-benzothiazylsulphenamide (Vulkacit^{®} CZ - Bayer); DPG: diphenyl guanidine (product Vulkacit^{®} D - Bayer). | |

The static mechanical properties were measured as reported in Examples 1-2. The results obtained were given in Table 4. The dynamic mechanical properties were measured using an Instron dynamic device in the traction-compression mode according to the following methods. A test piece of the crosslinked material having a cylindrical form (length = 25 mm; diameter = 14 mm), compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.33% with respect to the length under pre-load, with a 100 Hz frequency. The dynamic mechanical properties are expressed in terms of dynamic elastic modulus (E') and Tan delta (loss factor) values. As is known, the Tan delta value is calculated as a ratio between the viscous modulus (E") and the elastic modulus (E'), both of them being determined with the above dynamic measurements. The results obtained were given in Table 4. Hardness in IRHD degrees was measured at 23°C and at 100°C according to ISO standard 48 on samples of the abovementioned elastomeric materials vulcanized at 170°C for 10 min. The results obtained were given in Table 4.

**TABLE 4**

| EXAMPLE | 4 |
|---|---|
| STATIC MECHANICAL PROPERTIES | |
| 100% Modulus (MPa) | 2.5 |
| 300% Modulus (MPa) | 11.0 |
| Stress at break (MPa) | 17.3 |
| Elongation at break (%) | 474 |
| IRHD hardness (23°C) | 75.0 |
| IRHD hardness (100°C) | 63.0 |
| DYNAMIC MECHANICAL PROPERTIES | |
| E' (23°C) (MPa) | 11.56 |
| E' (100°C) (MPa) | 6.02 |
| Tan delta (23°C) | 0.439 |
| Tan delta (100°C) | 0.194 |

The tyres having size 285/40R19, were mounted on a Ferrari F137 and tested on a racing circuit: the obtained results are given in Table 5.

In order to evaluate the tyre behavoiur, the test driver simulated some characteristic manoeuvring (change of lane, entering a bend, leaving a bend, for example) carried out at constant speed, in acceleration and in deceleration. Then the test driver judged the tyre behaviour and assigned a score depending on the tyre performance during said manoeuvring.

The handling is generally divided into two voices (soft handling and hard handling) depending on the type of manoeuvre carried out by the test driver. The soft handling relates to the use of the tyre under normal driving conditions, i.e. in conditions of normal speed and good transversal grip. On the contrary, the hard handling tests describe the behaviour of the tyre at the limit of adherence, i.e. under extreme driving conditions. In the latter case the test driver executes manoeuvres which an average driver might be forced to carry out in the case of unforeseen and hazardous circumstances: sharp steering at high speed, sudden changing of lanes to avoid obstacles, sudden braking, and the like.

Two different types of tests were carried out: behaviour at normal speed (soft handling) and behaviour at the limit of adherence (hard handling).

As far as the soft handling tests were concerned, the test driver assessed: emptiness in the centre, that is the delay and the degree of response of the vehicle to small steering angles; the promptness of response to the steering coming into a bend; the progressiveness of response to the steering travelling in a bend; centring in a bend, that is the tyre capacity to keep the vehicle on a bend with a constant radius without continuous steering corrections; realignment, that is the capacity of the tyre to allow the vehicle to return to a rectilinear trajectory at the exit of a bend with contained and dampened transverse oscillations.

As far as the hard handling tests were concerned, the test driver assessed: the force on the steering wheel when turning violently; the promptness of insertion, that is the behaviour of the tyre in transition at the entrance of the bend taken at the limit speed; the balancing, that is the degree of oversteering or under-steering of the vehicle; the yield, that is the tyre capacity to absorb a strong fast transfer of the load as a consequence of a sudden change of lane without excessive deformation, and therefore without compromising vehicle stability and controllability; release in a bend, that is the tyre capacity to dampen the effects of instability resulting from the sudden release of the accelerator during a bend taken at the limit speed; controllability, that is the tyre capacity to maintain and/or return the vehicle to the trajectory after the loss of adherence.

Table 5 sums up the test driver's score sheet for the tyres controllability. The results of said tests are expressed by means of an evaluation scale representing the subjective opinion expressed by the test driver through a point system. The values reproduced in the following table represent a mean value between those obtained in several test sessions (5 - 6 tests, for example) and given by several test drivers. It should be noted that the scale of values runs from a minimum of 4 to a maximum of 9.

**TABLE 5**

| | | 3 (*) | 4 |
|---|---|---|---|
| Steering behaviour | Emptiness at the centre | 7.0 | 7.0 |
| (Soft handling) | | | |
| | Promptness | 7.0 | 7.0 |
| | Progressiveness | 7.0 | 7.0 |
| | Centring in bend | 7.0 | 7.5 |
| | Realignment | 7.5 | 7.5 |
| Behaviour at limit | Promptness of insertion | 7.0 | 7.0 |
| (Hard handling) | | | |
| | Balancing | 6.5 | 7.0 |
| | Yield | 6.5 | 7.0 |
| | Release in bend | 6.5 | 7.5 |
| | Understeering | 7.0 | 7.0 |
| | Oversteering | 6.5 | 7.5 |
| | Controllability | 6.5 | 7.5 |

| | | | |
|---|---|---|---|
| (*): comparative. | | | |

The results given in Table 5 clearly show that the tyre according to the present invention (Example 4) has a better behaviour with respect to the comparative tyre (Example 3), in particular, shows improved performances during use at high operating speed and/or under extreme driving conditions (hard handling) combined with a good behaviour under normal driving conditions (soft handling), particularly comfort and manoeuvrability.

## Claims

1. Tyre (100) for vehicle wheels comprising:
- a carcass structure (101) shaped in a substantially toroidal configuration, the opposite lateral edges of which are associated with respective right-hand and left-hand bead wires (102) to form respective beads;
- a belt structure (106) applied in a radially external position with respect to said carcass structure;
- a tread band (109) radially superimposed on said belt structure;
- at least one layer of crosslinked elastomeric material (111) applied in a radially internal position with respect to said tread band;
- a pair of sidewalls (108) applied laterally on opposite sides with respect to said carcass structure;
wherein said at least one layer of crosslinked elastomeric material (111) has the following characteristics:
- a dynamic elastic modulus (E'), measured at 70°C, not lower than 20 MPa;
- a ratio between tensile modulus at 100% elongation (M100) and tensile modulus at 10% elongation (M10) not lower than 1.5.

2. Tyre for vehicle wheels according to claim 1, wherein said at least one layer of crosslinked elastomeric material has a dynamic elastic modulus (E'), measured at 70°C, of from 25 MPa to 50 MPa.

3. Tyre for vehicle wheels according to claim 1 or 2, wherein said at least one layer of crosslinked elastomeric material has a ratio between tensile modulus at 100% elongation (M100) and tensile modulus at 10% elongation (M10) of from 2 to 5.

4. Tyre for vehicle wheels according to any one of the preceding claims, wherein said at least one layer of crosslinked elastomeric material has a dynamic elastic modulus (E'), measured at 23°C, not lower than 30 MPa.

5. Tyre for vehicle wheels according to claim 4, wherein said at least one layer of crosslinked elastomeric material has a dynamic elastic modulus (E'), measured at 23°C, of from 35 MPa to 70 MPa.

6. Tyre for vehicle wheels according to any one of the preceding claims, wherein said at least one layer of crosslinked elastomeric material has a percentage variation of tensile modulus at 10% elongation (M10), measured in a direction substantially parallel to the equatorial plane of the tyre, with respect to tensile modulus at 10% elongation (M10), measured in a direction substantially perpendicular to the equatorial plane of the tyre, not higher than 20%.

7. Tyre for vehicle wheels according to claim 6, wherein said at least one layer of crosslinked elastomeric material has a percentage variation of tensile modulus at 10% elongation (M10), measured in a direction substantially parallel to the equatorial plane of the tyre, with respect to tensile modulus at 10% elongation (M10), measured in a direction substantially perpendicular to the equatorial plane of the tyre, not higher than 15%.

8. Tyre for vehicle wheels according to claim 7, wherein said at least one layer of crosslinked elastomeric material has a percentage variation of tensile modulus at 10% elongation (M10), measured in a direction substantially parallel to the equatorial plane of the tyre, with respect to tensile modulus at 10% elongation (M10), measured in a direction substantially perpendicular to the equatorial plane of the tyre, not higher than 5%.

9. Tyre for vehicle wheels according to any one of the preceding claims, wherein said at least one layer of crosslinked elastomeric material has a thickness lower than 2 mm.

10. Tyre for vehicle wheels according to claim 9, wherein said at least one layer of crosslinked elastomeric material has a thickness of from 0.5 mm to 1.5 mm.

11. Tyre for vehicle wheels according to any one of the preceding claims, wherein said at least one layer of crosslinked elastomeric material is placed between said tread band and said belt structure.

12. Tyre for vehicle wheels according to any one of claims 1-10, wherein said at least one layer of crosslinked elastomeric material is placed between said belt structure and said carcass structure.

13. Tyre for vehicle wheels according to any one of the preceding claims, wherein said at least one layer of crosslinked elastomeric material is formed by a plurality of coils of a continuous elongated element.

14. Tyre for vehicle wheels according to any one of the preceding claims, wherein said elastomeric material comprises:
(a) at least one diene elastomeric polymer;
(b) at least one layered inorganic material having an individual layer thickness of from 0.01 nm to 30 nm.

15. Tyre for vehicle wheels according to claim 14, wherein the layered inorganic material (b) has an individual layer thickness of from 0.05 nm to 15 nm.

16. Tyre for vehicle wheels according to claim 15, wherein the layered inorganic material (b) has an individual layer thickness of from 0.1 nm to 2 nm.

17. Tyre for vehicle wheels according to any one of claims 14 to 16, wherein the layered inorganic material (b) is present in the elastomeric material in an amount of from 1 phr to 120 phr.

18. Tyre for vehicle wheels according to claim 17 wherein the layered inorganic material (b) is present in the elastomeric material in an amount of from 5 phr to 80 phr.

19. Tyre for vehicle wheels according to any one of claims 14 to 18, wherein the layered inorganic material (b) is selected from phyllosilicates such as: smectites, such as, montmorillonite, nontronite, beidellite, volkonskoite, hectorite, saponite, sauconite; vermiculite; halloisite; sericite; or mixtures thereof.

20. Tyre for vehicle wheels according to claim 19, wherein the layered inorganic material (b) is montmorillonite.

21. Tyre for vehicle wheels according to any one of claims 14 to 20, wherein the layered inorganic material (b) is treated with a compatibilizer.

22. Tyre for vehicle wheels according to claim 21, wherein the compatibilizer is selected from the quaternary ammonium or phosphonium salts having general formula (I) : 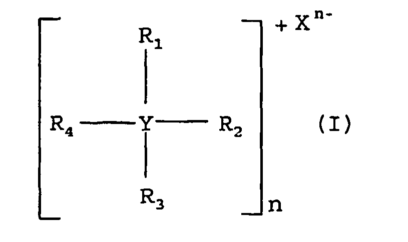 wherein:
- Y represents N or P;
- R₁, R₂, R₃ and R₄, which may be identical or different, represent a linear or branched C₁-C₂₀ alkyl or hydroxyalkyl group; a linear or branched C₁-C₂₀ alkenyl or hydroxyalkenyl group; a group -R₅-SH or -R₅-NH₂ wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulphur;
- Xⁿ⁻ represents an anion such as the chlorine ion, the sulphate ion or the phosphate ion;
- n represents 1, 2 or 3.

23. Tyre for vehicle wheels according to any one of claims 14 to 22, wherein the diene elastomeric polymer (a) has a glass transition temperature below 20°C.

24. Tyre for vehicle wheels according to claim 23, wherein the diene elastomeric polymer (a) is selected from: natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

25. Tyre for vehicle wheels according to any one of claim 14 to 24, wherein the elastomeric material comprises at least 10% by weight with respect to the total weight of the at least one diene elastomeric polymer (a) of natural rubber.

26. Tyre for vehicle wheels according to claim 25, wherein the elastomeric material comprises between 20% by weight and 100% by weight with respect to the total weight of the at least one diene elastomeric polymer (a) of natural rubber.

27. Tyre for vehicle wheels according to any one of claims 14 to 26, wherein the elastomeric material further comprises at least one elastomeric polymer of one or more monoolefins with an olefinic comonomer or derivatives thereof (a').

28. Tyre for vehicle wheels according to claim 27, wherein the elastomeric polymer (a') is selected from: ethylene/propylene copolymers (EPR) or ethylene/propylene/diene copolymers (EPDM) ; polyisobutene; butyl rubbers; halobutyl rubbers; or mixtures thereof.

29. Tyre for vehicle wheels according to any one of claim 14 to 28, wherein the elastomeric material comprises at least one carbon black filler (c).

30. Tyre for vehicle wheels according to claim 29, wherein the carbon black filler (c) has a surface area of not less than 20 m²/g (determined by CTAB absorption as described in Standard ISO 6810:1995).

31. Tyre for vehicle wheels according to claim 29 or 30, wherein the carbon black filler (c) is present in the elastomeric material in an amount of from 0.1 phr to 120 phr.

32. Tyre for vehicle wheels according to claim 31, wherein the carbon black filler (c) is present in the elastomeric material in an amount of from 20 phr to 90 phr.

33. Tyre for vehicle wheels according to any one of claims 14 to 32, wherein the elastomeric material comprises at least one silane coupling agent (d).

34. Tyre for vehicle wheels according to claim 33, wherein the silane coupling agent (d) is selected from those having at least one hydrolizable silane group which may be identified by the following general formula (II) :
(R)₃Si-CₙH₂ₙ-X (II)
wherein the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ or -S-COR in which m and n are integers between 1 and 6 inclusive and the groups R are defined as above.

35. Tyre for vehicle wheels according to claim 33 or 34, wherein the silane coupling agent (d) is present in the elastomeric material in an amount of from 0.01 phr to 10 phr.

36. Tyre for vehicle wheels according to claim 35, wherein the silane coupling agent (d) is present in the elastomeric material in an amount of from 0.5 phr to 5 phr.

37. Tyre for vehicle wheels according to any one of claims 14 to 36, wherein at least one additional reinforcing filler is present, in an amount of from 0.1 phr to 120 phr, in the elastomeric material.

38. Tyre for vehicle wheels according to claim 37, wherein the reinforcing filler is silica.

39. Tyre for vehicle wheels according to claim 37, wherein at least one silane coupling agent (d) is present.

40. Tyre for vehicle wheels according to any one of the preceding claims, wherein the tread band is formed by a crosslinked elastomeric material having a dynamic elastic modulus, measured at 23°C, of from 5 MPa to 25 MPa.

41. Tyre for vehicle wheels according to claim 40, wherein the tread band is formed by a crosslinked elastomeric material having a dynamic elastic modulus, measured at 23°C, of from 7 MPa to 20 MPa.

42. Tyre for vehicle wheels according to any one of the preceding claims, wherein the tread band is formed by a crosslinked elastomeric material having a dynamic elastic modulus, mesured at 100°C, of from 3 MPa to 10 MPa.

43. Tyre for vehicle wheels according to claim 42, wherein the tread band is formed by a crosslinked elastomeric material having a dynamic elastic modulus, measured at 100°C, of from 3.5 MPa to 8 MPa.

44. Tyre for vehicle wheels according to any one of the preceding claims, wherein the tread band is formed by a crosslinked elastomeric material having a Tan delta, measured at 23°C, of from 0.20 to 0.90.

45. Tyre for vehicle wheels according to claim 44, wherein the tread band is formed by a crosslinked elastomeric material having a Tan delta, measured at 23°C, of from 0.30 to 0.70.

46. Tyre for vehicle wheels according to any one of the preceding claims, wherein the tread band is formed by a crosslinked elastomeric material having a Tan delta, measured at 100°C, of from 0.10 to 0.35.

47. Tyre for vehicle wheels according to claim 46, wherein the tread band is formed by a crosslinked elastomeric material having a Tan delta, measured at 100°C, of from 0.15 to 0.30.

48. Tyre for vehicle wheels according to any one of the preceding claims, wherein the tread band is formed by a crosslinked elastomeric material having a IRHD hardness, measured at 23°C, of from 65 to 85.

49. Tyre for vehicle wheels according to claim 48, wherein the tread band is formed by a crosslinked elastomeric material having a IRHD hardness, measured at 23°C, of from 70 to 80.

50. Tyre for vehicle wheels according to any one of the preceding claims, wherein the tread band is formed by a crosslinked elastomeric material having a IRHD hardness, measured at 100°C, of from 45 to 75.

51. Tyre for vehicle wheels according to claim 50, wherein the tread band is formed by a crosslinked elastomeric material having a IRHD hardness, measured at 100 °C, of from 55 to 66.

## Patentansprüche

1. Reifen (100) für Fahrzeugräder
- mit einem Karkassenaufbau (101), der im Wesentlichen in eine Torusform gebracht ist und dessen gegenüberliegende Seitenränder den jeweiligen rechten und linken Wulstdrähten (102) zur Bildung entsprechender Wulste zugeordnet sind,
- mit einem Gurtaufbau (106), der in einer radial äußeren Position bezüglich des Karkassenaufbaus aufgebracht ist,
- mit einem Laufflächenband (109), das radial auf den Gurtaufbau aufgelegt ist,
- mit wenigstens einer Schicht aus einem vernetzten elastomeren Material (111), das in einer radial inneren Position bezüglich des Laufflächenbandes aufgebracht ist, und
- mit einem Paar von Seitenwänden (108), die seitlich auf gegenüberliegenden Seiten bezüglich des Karkassenaufbaus angebracht sind,
- wobei die wenigstens eine Schicht aus vernetztem elastomeren Material (111) die folgenden Eigenschaften hat:
-- einen bei 70°C gemessenen dynamischen Elastizitätsmodul (E') von nicht weniger als 20 MPa und
-- ein Verhältnis zwischen dem Zugmodul bei 100% Dehnung (M100) und dem Zugmodul bei 10% Dehnung (M10) von nicht weniger als 1,5.

2. Reifen für Fahrzeugräder nach Anspruch 1, bei welchem die wenigstens eine Schicht aus vemetztem elastomeren Material einen bei 70°C gemessenen dynamischen Elastizitätsmodul (E') von 25 MPa bis 50 MPa hat.

3. Reifen für Fahrzeugräder nach Anspruch 1 oder 2, bei welchem die wenigstens eine Schicht aus vemetztem elastomeren Material ein Verhältnis zwischen dem Zugmodul bei 100% Dehnung (M100) und dem Zugmodul bei 10% Dehnung (M10) von 2 bis 5 hat.

4. Reifen für Fahrzeugräder nach einem der vorhergehenden Ansprüche, bei welchem die wenigstens eine Schicht aus vernetztem elastomeren Material einen bei 23°C gemessenen dynamischen Elastizitätsmodul (E') von nicht weniger als 30 MPa hat.

5. Reifen für Fahrzeugräder nach Anspruch 4, bei welchem die wenigstens eine Schicht aus vernetztem elastomeren Material einen bei 23°C gemessenen dynamischen Elastizitätsmodul (E') von 35 MPa bis 70 MPa hat.

6. Reifen für Fahrzeugräder nach einem der vorhergehenden Ansprüche, bei welchem die wenigstens eine Schicht aus vernetztem elastomeren Material eine Prozentänderung des Zugmoduls bei 10° Dehnung (M10), gemessen in eine Richtung im Wesentlichen parallel zur Äquatorialebene des Reifens, bezogen auf den Zugmodul bei 10% Dehnung (M10), gemessen in einer Richtung im Wesentlichen senkrecht zur Äquatorialebene des Reifens von nicht mehr als 20%, hat.

7. Reifen für Fahrzeugräder nach Anspruch 6, bei welchem die wenigstens eine Schicht aus vernetztem elastomeren Material eine Prozentänderung des Zugmoduls bei 10% Dehnung (M10), gemessen in eine Richtung im Wesentlichen parallel zur Äquatorialebene des Reifens, bezogen auf den Zugmodul bei 10% Dehnung (M10), gemessen in eine Richtung im Wesentlichen senkrecht zur Äquatorialebene des Reifens, von nicht mehr als 15%, hat.

8. Reifen für Fahrzeugräder nach Anspruch 7, bei welchem die wenigstens eine Schicht aus vernetztem elastomeren Material eine Prozentänderung des Zugmoduls bei 10% Dehnung (M10), gemessen in eine Richtung im Wesentlichen parallel zur Äquatorialebene des Reifens, bezogen auf den Zugmodul bei 10% Dehnung (M10), gemessen in eine Richtung im Wesentlichen senkrecht zur Äquatorialebene des Reifens, von nicht mehr als 5%, hat.

9. Reifen für Fahrzeugräder nach einem der vorhergehenden Ansprüche, bei welchem die wenigstens eine Schicht aus vernetztem elastomeren Material eine Dicke von weniger als 2 mm hat.

10. Reifen für Fahrzeugräder nach Anspruch 9, bei welchem die wenigstens eine Schicht aus vernetztem elastomeren Material eine Dicke von 0,5 mm bis 1,5 mm hat.

11. Reifen für Fahrzeugräder nach einem der vorhergehenden Ansprüche, bei welchem die wenigstens eine Schicht aus vemetztem elastomeren Material zwischen dem Laufflächenband und dem Gurtaufbau angeordnet ist.

12. Reifen für Fahrzeugräder nach einem der Ansprüche 1 bis 10, bei welchem die wenigstens eine Schicht aus vernetztem elastomeren Material zwischen dem Gurtaufbau und dem Karkassenaufbau angeordnet ist.

13. Reifen für Fahrzeugräder nach einem der vorhergehenden Ansprüche, bei welchem die wenigstens eine Schicht aus vemetztem elastomeren Material von einer Vielzahl von Windungen eines fortlaufenden langgestreckten Elements gebildet wird.

14. Reifen für Fahrzeugräder nach einem der vorhergehenden Ansprüche, bei welchem das elastomere Material
(a) wenigstens ein elastomeres Dienpolymer und
(b) wenigstens ein geschichtetes anorganisches Material mit einer Einzelschichtdicke von 0,01 nm bis 30 nm aufweist.

15. Reifen für Fahrzeugräder nach Anspruch 14, bei welchem das geschichtete anorganische Material (b) eine Einzelschichtdicke von 0,05 nm bis 15 nm hat.

16. Reifen für Fahrzeugräder nach Anspruch 15, bei welchem das geschichtete anorganische Material (b) eine Einzelschichtdicke von 0,1 nm bis 2 nm hat.

17. Reifen für Fahrzeugräder nach einem der Ansprüche 14 bis 16, bei welchem das geschichtete anorganische Material (b) in dem elastomeren Material in einer Menge von 1 phr bis 120 phr vorhanden ist.

18. Reifen für Fahrzeugräder nach Anspruch 17, bei welchem das geschichtete anorganische Material (b) in dem elastomeren Material in einer Menge von 5 phr bis 80 phr vorhanden ist.

19. Reifen für Fahrzeugräder nach einem der Ansprüche 14 bis 18, bei welchem das geschichtete anorganische Material (b) aus Phyllosilicaten ausgewählt wird, wie Smektiten, beispielsweise Montmorillonit, Nontronit, Beidellit, Volkonskoit, Hektorit, Saponit oder Sauconit; Vermiculit; Halloisit; Sericit; oder Mischungen davon.

20. Reifen für Fahrzeugräder nach Anspruch 19, bei welchem das geschichtete anorganische Material (b) Montmorillonit ist.

21. Reifen für Fahrzeugräder nach einem der Ansprüche 14 bis 20, bei welchem das geschichtete anorganische Material (b) mit einem Kompatibilisierungsmittel behandelt ist.

22. Reifen für Fahrzeugräder nach Anspruch 21, bei welchem das Kompatibilisierungsmittel aus quaternären Ammonium- oder Phosphoniumsalzen ausgewählt wird, die die allgemeine Formel (I) haben: 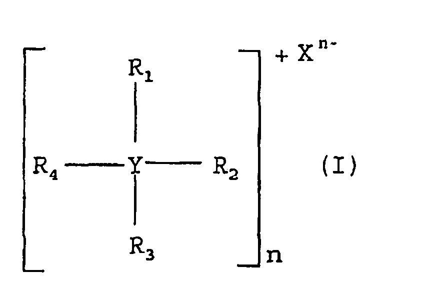 wobei
- Y für N oder P steht,
- R₁, R₂, R₃ und R₄ identisch oder verschieden sein können und eine lineare oder verzweigte C₁ bis C₂₀-Alkyl- oder -Hydroxyalkylgruppe, eine lineare oder verzweigte C₁ bis C₂₀-Alkenyl- oder -Hydroxyalkenylgruppe; eine Gruppe -R₅-SH oder -R₅-NH₂, wenn R₅ eine lineare oder verzweigte C₁ bis C₂₀-Alkylengruppe ist; eine C₆ bis C₁₈-Arylgruppe; eine C₇ bis C₂₀-Arylalkyl- oder -Alkylarylgruppe; und eine C₅ bis C₁₈-Cycloalkylgruppe aufweisen, die gegebenenfalls ein Heteroatom, wie Sauerstoff, Stickstoff oder Schwefel enthält,
- Xⁿ⁻ ein Anion, wie ein Chlorion, Sulphation oder Phosphation darstellt und
- n für 1, 2 oder 3 steht.

23. Reifen für Fahrzeugräder nach einem der Ansprüche 14 bis 22, bei welchem das elastomere Dienpolymer (a) eine Glasübergangstemperatur unter 20°C hat.

24. Reifen für Fahrzeugräder nach Anspruch 23, bei welchem das elastomere Dienpolymer (a) ausgewählt ist aus natürlichem oder synthetischem Cis-1,4-polyisopren; 3,4-Polyisopren, Polybutadien, fakultativ halogenierten Isopren-/Isobuten-Copolymeren, 1,3-Butadien-/Acrylnitril-Copolymeren, Styrol-/1,3-Butadien-Copolymeren, Styrol-/Isopren-/1,3-Butadien-Copolymeren, Styrol-/1,3-Butadien-/Acrylnitril-Copolymeren oder Mischungen davon.

25. Reifen für Fahrzeugräder nach einem der Ansprüche 14 bis 24, bei welchem das elastomere Material wenigstens 10 Gew.-% bezogen auf das Gesamtgewicht des wenigstens einen elastomeren Dienpolymers (a) von Naturkautschuk aufweist.

26. Reifen für Fahrzeugräder nach Anspruch 25, bei welchem das elastomere Material wenigstens zwischen 20 Gew.-% und 100 Gew.-% bezogen auf das Gesamtgewicht des wenigstens einen elastomeren Dienpolymers (a) von Naturkautschuk aufweist.

27. Reifen für Fahrzeugräder nach einem der Ansprüche 14 bis 26, bei welchem das elastomere Material weiterhin wenigstens ein elastomeres Polymer von einem oder mehreren Monoolefinen mit einem olefinischen Comonomer oder Derivaten davon (a') aufweist.

28. Reifen für Fahrzeugräder nach Anspruch 27, bei welchem das elastomere Polymer (a') ausgewählt wird aus Ethylen-/Propylen-Copolymeren (EPR) oder Ethylen-/Propylen-/Dien-Copolymeren (EPDM); Polyisobuten; Butylkautschuken; Halobutylkautschuken oder Mischungen davon.

29. Reifen für Fahrzeugräder nach einem der Ansprüche 14 bis 28, bei welchem das elastomere Material wenigstens einen Rußfüllstoff (c) aufweist.

30. Reifen für Fahrzeugräder nach Anspruch 29, bei welchem der Rußfüllstoff (c) eine spezifische Oberfläche von nicht weniger als 20 m²/g (bestimmt durch CTAB-Absorption, wie in der ISO-Norm 6810:1995 beschrieben ist) hat.

31. Reifen für Fahrzeugräder nach Anspruch 29 oder 30, bei welchem der Rußfüllstoff (c) in dem elastomeren Material in einer Menge von 0,1 phr bis 120 phr vorhanden ist.

32. Reifen für Fahrzeugräder nach Anspruch 31, bei welchem der Rußfüllstoff (c) in dem elastomeren Material in einer Menge von 20 phr bis 90 phr vorhanden ist.

33. Reifen für Fahrzeugräder nach einem der Ansprüche 14 bis 32, bei welchem das elastomere Material wenigstens ein Silanhaftmittel (d) aufweist.

34. Reifen für Fahrzeugräder nach Anspruch 33, bei welchem das Silanhaftmittel (d) aus denen ausgewählt wird, die wenigstens eine hydrolysierbare Silangruppe haben, die durch die folgende allgemeine Formel (II) **gekennzeichnet** werden kann:
(R)₃Si-CₙH₂ₙ-X (II),
wobei die Gruppen R identisch oder verschieden sein können und ausgewählt werden aus Alkyl-, Alkoxy- oder Aryloxygruppen oder aus Halogenatomen unter der Bedingung, dass wenigstens eine der Gruppen R eine Alkoxy- oder Aryloxygruppe ist; n für eine ganze Zahl zwischen 1 und 6 einschließlich steht; X eine Gruppe ist, die aus Nitroso-, Mercapto-, Amino-, Epoxid-, Vinyl-, Imid-, Chlor-, -(S)ₘCₙH₂ₙ-Si-(R)₃ oder -S-COR ausgewählt ist und wenn m und n ganze Zahlen zwischen 1 und 6 einschließlich und die Gruppen R wie vorstehend definiert sind.

35. Reifen für Fahrzeugräder nach Anspruch 33 oder 34, bei welchem das Silanhaftmittel (d) in dem elastomeren Material in einer Menge von 0,01 phr bis 10 phr vorhanden ist.

36. Reifen für Fahrzeugräder nach Anspruch 15, bei welchem das Silanhaftmittel (d) in dem elastomeren Material in einer Menge von 0,5 phr bis 5 phr vorhanden ist.

37. Reifen für Fahrzeugräder nach einem der Ansprüche 14 bis 36, bei welchem wenigstens ein zusätzlicher Verstärkungsfüllstoff in einer Menge von 0,1 phr bis 120 phr in dem elastomeren Material vorhanden ist.

38. Reifen für Fahrzeugräder nach Anspruch 37, bei welchem der verstärkende Füllstoff Siliciumdioxid ist.

39. Reifen für Fahrzeugräder nach Anspruch 37, bei welchem wenigstens ein Silanhaftmittel (d) vorhanden ist.

40. Reifen für Fahrzeugräder nach einem der vorhergehenden Ansprüche, bei welchem das Laufflächenband von einem vernetzten elastomeren Material gebildet wird, das einen bei 23°C gemessenen dynamischen Elastizitätsmodul von 5 MPa bis 25 MPa hat.

41. Reifen für Fahrzeugräder nach Anspruch 40, bei welchem das Laufflächenband von einem vernetzten elastomeren Material gebildet wird, das einen bei 23°C gemessenen dynamischen Elastizitätsmodul von 7 MPa bis 20 MPa hat.

42. Reifen für Fahrzeugräder nach einem der vorhergehenden Ansprüche, bei welchem das Laufflächenband von einem vernetzten elastomeren Material gebildet wird, das einen bei 100°C gemessenen dynamischen Elastizitätsmodul von 3 MPa bis 10 MPa hat.

43. Reifen für Fahrzeugräder nach Anspruch 42, bei welchem das Laufflächenband von einem vernetzten elastomeren Material gebildet wird, das einen bei 100°C gemessenen dynamischen Elastizitätsmodul von 3,5 MPa bis 8 MPa hat.

44. Reifen für Fahrzeugräder nach einem der vorhergehenden Ansprüche, bei welchem das Laufflächenband von einem vernetzten elastomeren Material gebildet wird, das einen bei 23°C gemessenen Tan delta von 0,20 bis 0,90 hat.

45. Reifen für Fahrzeugräder nach Anspruch 44, bei welchem das Laufflächenband von einem vernetzten elastomeren Material gebildet wird, das einen bei 23°C gemessenen Tan delta von 0,30 bis 0,70 hat.

46. Reifen für Fahrzeugräder nach einem der vorhergehenden Ansprüche, bei welchem das Laufflächenband von einem vernetzten elastomeren Material gebildet wird, das einen bei 100°C gemessenen Tan delta von 0,10 bis 0,35 hat.

47. Reifen für Fahrzeugräder nach Anspruch 46, bei welchem das Laufflächenband von einem vernetzten elastomeren Material gebildet wird, das einen bei 100°C gemessenen Tan delta von 0,15 bis 0,30 hat.

48. Reifen für Fahrzeugräder nach einem der vorhergehenden Ansprüche, bei welchem das Laufflächenband von einem vernetzten elastomeren Material gebildet wird, das eine bei 23°C gemessene IRHD-Härte von 65 bis 85 hat.

49. Reifen für Fahrzeugräder nach Anspruch 48, bei welchem das Laufflächenband von einem vernetzten elastomeren Material gebildet wird, das eine bei 23°C gemessene IRHD-Härte von 70 bis 80 hat.

50. Reifen für Fahrzeugräder nach einem der vorhergehenden Ansprüche, bei welchem das Laufflächenband von einem vernetzten elastomeren Material gebildet wird, das eine bei 100°C gemessene IRHD-Härte von 45 bis 75 hat.

51. Reifen für Fahrzeugräder nach Anspruch 50, bei welchem das Laufflächenband von einem vernetzten elastomeren Material gebildet wird, das eine bei 100°C gemessene IRHD-Härte von 55 bis 66 hat.

## Revendications

1. Pneu (100) pour roues de véhicule, qui comprend :
- une structure de carcasse (101), de forme sensiblement toroïdale, dont les bords latéraux opposés sont associés respectivement à des fils métalliques (102) de talon gauche ou droit qui constituent ces talons ;
- une structure de ceinture (106), disposée en position radialement externe par rapport à ladite structure de carcasse ;
- une bande de roulement (109), radialement superposée à ladite structure de ceinture ;
- au moins une couche de matériau élastomère réticulé (111), disposée en position radialement interne par rapport à ladite bande de roulement ;
- et une paire de flancs (108), disposés latéralement sur les bords opposés de ladite structure de carcasse ;
et dans lequel pneu ladite couche de matériau élastomère réticulé (111) au nombre d'au moins une présente les caractéristiques suivantes :
- un module d'élasticité dynamique E' d'au moins 20 MPa à 70 °C ;
- et un rapport d'au moins 1,5 entre M100, le module de traction à 100 % d'allongement, et M10, le module de traction à 10 % d'allongement.

2. Pneu pour roues de véhicule,'conforme à la revendication 1, dans lequel ladite couche de matériau élastomère réticulé au nombre d'au moins une présente, à 70 °C, un module d'élasticité dynamique E' de 25 à 50 MPa.

3. Pneu pour roues de véhicule, conforme à la revendication 1 ou 2, dans lequel ladite couche de matériau élastomère réticulé au nombre d'au moins une présente un rapport de 2 à 5 entre M100, le module de traction à 100 % d'allongement, et M10, le module de traction à 10 % d'allongement.

4. Pneu pour roues de véhicule, conforme à l'une des revendications précédentes, dans lequel ladite couche de matériau élastomère réticulé au nombre d'au moins une présente, à 23 °C, un module d'élasticité dynamique E' d'au moins 30 MPa.

5. Pneu pour roues de véhicule, conforme à la revendication 4, dans lequel ladite couche de matériau élastomère réticulé au nombre d'au moins une présente, à 23 °C, un module d'élasticité dynamique E' de 35 à 70 MPa.

6. Pneu pour roues de véhicule, conforme à l'une des revendications précédentes, dans lequel, concernant ladite couche de matériau élastomère réticulé au nombre d'au moins une, la valeur de M10, le module de traction à 10 % d'allongement, mesurée dans une direction sensiblement parallèle au plan équatorial du pneu, s'écarte d'au plus 20 % de la valeur de M10, le module de traction à 10 % d'allongement, mesurée dans une direction sensiblement perpendiculaire au plan équatorial du pneu.

7. Pneu pour roues de véhicule, conforme à la revendication 6, dans lequel, concernant ladite couche de matériau élastomère réticulé au nombre d'au moins une, la valeur de M10, le module de traction à 10 % d'allongement, mesurée dans une direction sensiblement parallèle au plan équatorial du pneu, s'écarte d'au plus 15 % de la valeur de M10, le module de traction à 10 % d'allongement, mesurée dans une direction sensiblement perpendiculaire au plan équatorial du pneu.

8. Pneu pour roues de véhicule, conforme à la revendication 7, dans lequel, concernant ladite couche de matériau élastomère réticulé au nombre d'au moins une, la valeur de M10, le module de traction à 10 % d'allongement, mesurée dans une direction sensiblement parallèle au plan équatorial du pneu, s'écarte d'au plus 5 % de la valeur de M10, le module de traction à 10 % d'allongement, mesurée dans une direction sensiblement perpendiculaire au plan équatorial du pneu.

9. Pneu pour roues de véhicule, conforme à l'une des revendications précédentes, dans lequel ladite couche de matériau élastomère réticulé au nombre d'au moins une a moins de 2 mm d'épaisseur.

10. Pneu pour roues de véhicule, conforme à la revendication 9, dans lequel ladite couche de matériau élastomère réticulé au nombre d'au moins une a de 0,5 à 1,5 mm d'épaisseur.

11. Pneu pour roues de véhicule, conforme à l'une des revendications précédentes, dans lequel ladite couche de matériau élastomère réticulé au nombre d'au moins une est placée entre ladite bande de roulement et ladite structure de ceinture.

12. Pneu pour roues de véhicule, conforme à l'une des revendications 1 à 10, dans lequel ladite couche de matériau élastomère réticulé au nombre d'au moins une est placée entre ladite structure de ceinture et ladite structure de carcasse.

13. Pneu pour roues de véhicule, conforme à l'une des revendications précédentes, dans lequel ladite couche de matériau élastomère réticulé au nombre d'au moins une est constituée de multiples enroulements d'un élément allongé continu.

14. Pneu pour roues de véhicule, conforme à l'une des revendications précédentes, dans lequel ledit matériau élastomère comprend :
a) au moins un élastomère qui est un polymère de diène ;
b) au moins un matériau inorganique disposé en couches, qui ont chacune de 0,01 à 30 nm d'épaisseur.

15. Pneu pour roues de véhicule, conforme à la revendication 14, dans lequel l'épaisseur de chaque couche du matériau inorganique (b) disposé en couches vaut de 0,05 à 15 nm.

16. Pneu pour roues de véhicule, conforme à la revendication 15, dans lequel l'épaisseur de chaque couche du matériau inorganique (b) disposé en couches vaut de 0,1 à 2 nm.

17. Pneu pour roues de véhicule, conforme à l'une des revendications 14 à 16, dans lequel le matériau inorganique (b) disposé en couches se trouve, dans le matériau élastomère, en une quantité de 1 à 120 pcpr (parties pour cent parties de résine).

18. Pneu pour roues de véhicule, conforme à la revendication 17, dans lequel le matériau inorganique (b) disposé en couches se trouve, dans le matériau élastomère, en une quantité de 5 à 80 pcpr.

19. Pneu pour roues de véhicule, conforme à l'une des revendications 14 à 18, pour lequel le matériau inorganique (b) disposé en couches est choisi parmi les phyllosilicates tels que les smectites, comme les montmorillonite, nontronite, beidellite, volkonskoïte, hectorite, saponite et sauconite, la vermiculite, l'halloysite et la séricite, ainsi que leurs mélanges.

20. Pneu pour roues de véhicule, conforme à la revendication 19, dans lequel le matériau inorganique (b) disposé en couches est de la montmorillonite.

21. Pneu pour roues de véhicule, conforme à l'une des revendications 14 à 20, pour lequel le matériau inorganique (b) disposé en couches a été traité avec un agent compatibilisant.

22. Pneu pour roues de véhicule, conforme à la revendication 21, pour lequel l'agent compatibilisant est choisi parmi les sels d'ammonium ou de phosphonium quaternaire, de formule générale (I) : 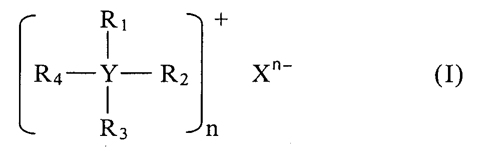 dans laquelle :
- Y représente un atome d'azote ou de phosphore ;
- R₁, R₂, R₃ et R₄ représentent des entités qui peuvent être identiques ou différentes, et représentent chacun :
- un groupe alkyle ou hydroxyalkyle en C₁₋₂₀ linéaire ou ramifié,
- un groupe alcényle ou hydroxyalcényle en C₁₋₂₀ linéaire ou ramifié,
- un groupe de formule -R₅-SH ou -R₅-NH₂ où R₅ représente un groupe alcanediyle en C₁₋₂₀ linéaire ou ramifié,
- un groupe aryle en C₆₋₁₈,
- un groupe aryl-alkyle ou alkyl-aryle en C₇₋₂₀,
- ou un groupe cycloalkyle en C₅₋₁₈, lequel groupe cycloalkyle peut comporter un hétéroatome comme un atome d'oxygène, d'azote ou de soufre ;
- Xⁿ⁻ représente un anion comme un ion chlorure, sulfate ou phosphate ;
- et n vaut 1, 2 ou 3.

23. Pneu pour roues de véhicule, conforme à l'une des revendications 14 à 22, dans lequel le polymère de diène élastomère (a) présente une température de transition vitreuse inférieure à 20 °C.

24. Pneu pour roues de véhicule, conforme à la revendication 23, pour lequel le polymère de diène élastomère (a) est choisi parmi du cis-1,4-polyisoprène naturel ou synthétique, du 3,4-polyisoprène, du polybutadiène, les copolymères d'isoprène et d'isobutène éventuellement halogénés, les copolymères de 1,3-butadiène et d'acrylonitrile, les copolymères de styrène et de 1,3-butadiène, les copolymères de styrène, d'isoprène et de 1,3-butadiène, et les copolymères de styrène, de 1,3-butadiène et d'acrylonitrile, ainsi que les mélanges de tels polymères.

25. Pneu pour roues de véhicule, conforme à l'une des revendications 14 à 24, dans lequel le matériau élastomère comprend au moins 10 % de caoutchouc naturel, en poids rapporté au poids total de polymère de diène élastomère (a) au nombre d'au moins un.

26. Pneu pour roues de véhicule, conforme à la revendication 25, dans lequel le matériau élastomère comprend de 20 à 100 % de caoutchouc naturel, en poids rapporté au poids total de polymère de diène élastomère (a) au nombre d'au moins un.

27. Pneu pour roues de véhicule, conforme à l'une des revendications 14 à 26, dans lequel le matériau élastomère comprend en outre (a') au moins un élastomère qui est un polymère d'une ou de plusieurs monooléfines et d'un comonomère oléfinique ou un dérivé d'un tel polymère.

28. Pneu pour roues de véhicule, conforme à la revendication 27, pour lequel le polymère élastomère (a') est choisi parmi les copolymères d'éthylène et de propylène (EPR), les copolymères d'éthylène, de propylène et de diène (EPDM), du polyisobutène, les caoutchoucs butyl et les caoutchoucs butyl halogénés, ainsi que les mélanges de tels polymères.

29. Pneu pour roues de véhicule, conforme à l'une des revendications 14 à 28, dans lequel le matériau élastomère comprend (c) au moins une charge formée de noir de carbone.

30. Pneu pour roues de véhicule, conforme à la revendication 29, dans lequel la charge de noir de carbone (c) présente une aire spécifique, mesurée par la méthode d'adsorption de CTAB (bromure de cétyl-triméthylammonium) décrite dans la norme ISO 6810/1995, d'au moins 20 m²/g.

31. Pneu pour roues de véhicule, conforme à la revendication 29 ou 30, dans lequel la charge de noir de carbone (c) se trouve, dans le matériau élastomère, en une quantité de 0,1 à 120 pcpr (parties pour cent parties de résine).

32. Pneu pour roues de véhicule, conforme à la revendication 31, dans lequel la charge de noir de carbone (c) se trouve, dans le matériau élastomère, en une quantité de 20 à 90 pcpr.

33. Pneu pour roues de véhicule, conforme à l'une des revendications 14 à 32, dans lequel le matériau élastomère comprend (d) au moins un agent de couplage de type silane.

34. Pneu pour roues de véhicule, conforme à la revendication 33, pour lequel l'agent de couplage de type silane (d) est choisi parmi ceux qui comportent au moins un groupe silyle hydrolysable, lesquels peuvent être représentés par la formule générale (II) suivante :
(R)₃Si-CₙH₂ₙ-X (II)
dans laquelle :
- les entités représentées par R peuvent être identiques ou différentes et sont choisies parmi les groupes alkyle, alcoxy et aryloxy et les atomes d'halogène, sous réserve qu'au moins l'une des entités représentées par R soit un groupe alcoxy ou aryloxy ;
- l'indice n est un nombre entier qui vaut de 1 à 6, bornes incluses ;
- et X représente une entité choisie parmi les groupes nitroso, mercapto, amino, époxyde, vinyle et imide, un atome de chlore et les groupes de formule -(S)ₘ-CₙH₂ₙ-Si(R)₃ ou -S-C(=O)R où les indices m et n sont chacun un nombre entier qui vaut de 1 à 6, bornes incluses, et les symboles R ont la signification indiquée ci-dessus.

35. Pneu pour roues de véhicule, conforme à la revendication 33 ou 34, dans lequel l'agent de couplage de type silane (d) se trouve, dans le matériau élastomère, en une quantité de 0,01 à 10 pcpr.

36. Pneu pour roues de véhicule, conforme à la revendication 35, dans lequel l'agent de couplage de type silane (d) se trouve, dans le matériau élastomère, en une quantité de 0,5 à 5 pcpr.

37. Pneu pour roues de véhicule, conforme à l'une des revendications 14 à 36, dans lequel il y a, dans le matériau élastomère, au moins une charge renforçante supplémentaire, en une quantité de 0,1 à 120 pcpr.

38. Pneu pour roues de véhicule, conforme à la revendication 37, dans lequel la charge renforçante est de la silice.

39. Pneu pour roues de véhicule, conforme à la revendication 37, dans lequel il y a au moins un agent de couplage de type silane (d).

40. Pneu pour roues de véhicule, conforme à l'une des revendications précédentes, dans lequel la bande de roulement est formée d'un matériau élastomère réticulé qui présente, à 23 °C, un module d'élasticité dynamique de 5 à 25 MPa.

41. Pneu pour roues de véhicule, conforme à la revendication 40, dans lequel la bande de roulement est formée d'un matériau élastomère réticulé qui présente, à 23 °C, un module d'élasticité dynamique de 7 à 20 MPa.

42. Pneu pour roues de véhicule, conforme à l'une des revendications précédentes, dans lequel la bande de roulement est formée d'un matériau élastomère réticulé qui présente, à 100 °C, un module d'élasticité dynamique de 3 à 10 MPa.

43. Pneu pour roues de véhicule, conforme à la revendication 42, dans lequel la bande de roulement est formée d'un matériau élastomère réticulé qui présente, à 100 °C, un module d'élasticité dynamique de 3,5 à 8 MPa.

44. Pneu pour roues de véhicule, conforme à l'une des revendications précédentes, dans lequel la bande de roulement est formée d'un matériau élastomère réticulé qui présente, à 23 °C, un facteur de dissipation (tg δ) de 0,20 à 0,90.

45. Pneu pour roues de véhicule, conforme à la revendication 44, dans lequel la bande de roulement est formée d'un matériau élastomère réticulé qui présente, à 23 °C, un facteur de dissipation (tg δ) de 0,30 à 0,70.

46. Pneu pour roues de véhicule, conforme à l'une des revendications précédentes, dans lequel la bande de roulement est formée d'un matériau élastomère réticulé qui présente, à 100 °C, un facteur de dissipation (tg δ) de 0,10 à 0,35.

47. Pneu pour roues de véhicule, conforme à la revendication 44, dans lequel la bande de roulement est formée d'un matériau élastomère réticulé qui présente, à 100 °C, un facteur de dissipation (tg δ) de 0,15 à 0,30.

48. Pneu pour roues de véhicule, conforme à l'une des revendications précédentes, dans lequel la bande de roulement est formée d'un matériau élastomère réticulé qui présente, à 23 °C, une dureté IRHD de 65 à 85.

49. Pneu pour roues de véhicule, conforme à la revendication 48, dans lequel la bande de roulement est formée d'un matériau élastomère réticulé qui présente, à 23 °C, une dureté IRHD de 70 à 80.

50. Pneu pour roues de véhicule, conforme à l'une des revendications précédentes, dans lequel la bande de roulement est formée d'un matériau élastomère réticulé qui présente, à 100 °C, une dureté IRHD de 45 à 75.

51. Pneu pour roues de véhicule, conforme à la revendication 50, dans lequel la bande de roulement est formée d'un matériau élastomère réticulé qui présente, à 100 °C, une dureté IRHD de 55 à 66.
